# EUROPÄISCHE PATENTSCHRIFT

(11) **EP 3 036 050 B1**
(45) Veröffentlichungstag und Bekanntmachung des Hinweises auf die Patenterteilung: **07.10.2020**
(21) Anmeldenummer: 14755774.8
(22) Anmeldetag: 14.08.2014
(51) Int. Cl.: B07B 1/18

(54) **PROFILIERTER SIEBSTAB UND SIEBVORRICHTUNG AUS PROFILIERTEN SIEBSTÄBEN**
PROFILED BAR AND SCREENING APPARATUS HAVING PROFILED BARS
BARRE PROFILÉE ET DISPOSITIF DE FILTRATION COMPOSÉ DE BARRES PROFILÉES

(30) Priorität: 20.08.2013 DE 102013013907; 05.08.2014 DE 102014011679
(43) Veröffentlichungstag der Anmeldung: 29.06.2016
(73) Patentinhaber: Andritz Fiedler GmbH, 93057 Regensburg (DE)
(72) Erfinder: MICKELAT, Thomas, 93149 Nittenau (DE); REINSTEIN, Michael, 93158 Teublit (DE)
(74) Vertreter: Hering, Hartmut
(86) Internationale Anmeldenummer: PCT/EP2014/002258
(87) Internationale Veröffentlichungsnummer: WO 2015/024648

(56) Entgegenhaltungen:
- DE-A1-102006 028 474
- FR-A- 1 449 000

## Beschreibung

Die Erfindung befasst sich mit einem profilierten Siebstab mit einem Fußbereich und einem Kopfbereich, welcher mit jeweils einem benachbarten Siebstab einen Siebschlitz bzw. Siebspalt erzeugende Schlitzflanken hat, wobei die Fußbereiche in Tragelementen aufgenommen sind und wobei die schlitzerzeugenden Flanken am Kopfbereich des Siebstabs stromaufwärtig und stromabwärtig jeweils einen Radius haben. Ferner bezieht sich die Erfindung auf eine Siebvorrichtung, bei der Siebschlitze oder Siebspalte zwischen profilierten Siebstäben gebildet werden, welche an ihren Fußbereichen in an die Fußbereichsgeometrie angepasste Aufnahmeausnehmungen von Tragelementen aufgenommen werden und an diesen dauerhaft befestigt sind. Derartige Siebvorrichtungen werden auch als "Stabsiebvorrichtungen" bezeichnet. Diese Siebvorrichtungen können in ebener Gestalt als Siebplatten oder in gerundeter Form als Siebkörbe ausgestaltet sein.

Aus DE 10 2006 028 474 A1 sind Siebstabkonstruktionen nach dem Oberbegriff von Anspruch 1 und eine Siebvorrichtung nach dem Oberbegriff von Anspruch 6 bekannt.

Profilierte Siebstäbe und Siebvorrichtungen aus profilierten Siebstäben, welche auch allgemein als "Stabsiebbauweise" bezeichnet werden, sind beispielsweise aus WO 2008/119548 A2, EP 0 316 570, EP 0 499 154 B1, EP 0808 941 B1, EP 1 205 227 A1, DE 44 32 842 A1, DE 196 09 316 C2 und EP 0 774 022 B1 bekannt.

Bei dem Sieb nach WO 2011/157529 A1 haben die Siebstäbe an ihren schlitzerzeugenden Flanken stromaufwärts und stromabwärts jeweils Krümmungen. Diese Krümmungen besitzen Radien, deren Mittelpunkte weit voneinander entfernt liegen. Sie haben auf jeden Fall keinen gemeinsamen Mittelpunkt.

Profilierte Siebstäbe und Siebvorrichtungen aus denselben weisen über die gesamte Bauhöhe oder Längsachse der Siebvorrichtung oder in Z-Richtung hinweg im wesentlichen eine gleichbleibende Schlitzweite und Profiltiefe auf. In Durchlaufrichtung bzw. in Z-Richtung der Siebvorrichtung jedoch ergeben sich unterschiedliche Anforderungen an die Durchführungsbedingungen für die Sieb- und Sortierbehandlung. So ändern sich beispielsweise die Eindickungsverhältnisse oder auch Faserstoffeindickungsverhältnisse und die Kapazitäten in Durchlaufrichtung einer solchen Siebvorrichtung.

Die Erfindung zielt daher darauf ab, einen profilierten Siebstab und eine Siebvorrichtung aus solchen profilierten Siebstäben bereit zu stellen, bei denen die Sortiereffizienz verbessert wird, eine geringe Verstopfungsneigung vorhanden ist und sich höhere Durchsatzmengen darstellen und erzielen lassen.

Hierzu wird nach der Erfindung einerseits ein profilierter Siebstab mit den Merkmalen des Anspruchs 1 bereitgestellt. Auch die stromaufwärtigen und stromabwärtigen schlitzerzeugenden Flanken am Kopfbereich von benachbarten Siebstäben jeweils einen Radius mit einem gemeinsamen Mittelpunkt haben, wobei die Radien der schlitzerzeugenden Flanken unterschiedlich groß sind. Da die unterschiedlichen Krümmungsradien der schlitzerzeugenden Flanken am Kopfbereich des Siebstabs stromaufwärtig und stromabwärtig einen gemeinsamen Mittelpunkt haben, lässt sich trotz einer Veränderung der Profiltiefe oder der Ausrichtung der den Siebschlitz bzw. den Siebspalt erzeugenden Schlitzflanken unter unterschiedlichen Winkeln zu einer Tangente der Mantel der Siebvorrichtung in beiden Fällen aber die Schlitzweite konstant und unverändert bleibt. Somit lassen sich mit den erfindungsgemäßen Siebstäben Siebvorrichtungen bereitstellen, bei denen zwar die Schlitzweite in Höhenrichtung oder Achsrichtung gesehen im wesentlichen konstant bleibt, aber unterschiedliche Profiltiefen sich zur Abstimmung auf die jeweils gewünschten Durchführungsbedingungen für die Siebbehandlung einstellen lassen. Hierdurch lässt sich insbesondere eine Verbesserung bei der Sortiereffizienz oder Siebeffizienz erzielen. Ferner lässt sich auch die Verstopfungsneigung reduzieren, und man kann höhere bzw. größere Durchsatzmengen erreichen.

Gemäß einer weiteren bevorzugten Ausgestaltungsform des profilierten Siebstabs kann der Radius der stromaufwärtigen schlitzerzeugenden Flanke größer als der Radius der stromabwärtigen schlitzerzeugenden Flanke sein.

Vorzugsweise ist der profilierte Siebstab derart ausgelegt, dass der Radius an der stromabwärtigen schlitzerzeugenden Flanke sich auf 0,1 mm bis 1,9 mm. vorzugsweise auf 0,2 mm bis 0,5 mm beläuft.

Der profilierte Siebstab ist vorzugsweise derart ausgelegt, dass der Radius an der stromaufwärtigen schlitzerzeugenden Flanke sich auf 2,0 mm bis 6 mm, vorzugsweise auf 2,1 mm bis 4,0 mm beläuft.

Ferner wird nach der Erfindung ein profilierter Siebstab bereitgestellt, bei welchem die Radien (R1, R2) an den stromaufwärtigen und stromabwärtigen schlitzerzeugenden Flanken (8, 9) durch eine geradlinig verlaufende Tangente verbunden sind.

Ferner wird nach der Erfindung eine Siebvorrichtung bereitgestellt, welche vorzugsweise in Form eines Siebkorbs ausgelegt ist, und welche die Merkmale des Anspruches 6 aufweist. Diese Siebvorrichtung hat zwischen profilierten Siebstäben gebildete Siebschlitze oder -spalte und die Siebstäbe werden an ihrem Fußbereich in an die Fußbereichsgeometrie angepassten Aufnahmeausnehmungen von Tragelementen aufgenommen und an diesen dauerhaft befestigt.

Die Siebstäbe sind an ihrem Kopfbereich nach Maßgabe der voranstehend beschriebenen Profilierungen ausgebildet.

Somit lassen sich die Siebstäbe in der Siebvorrichtung unter unterschiedlichen Profiltiefen und/oder unter unterschiedlichen Winkeln an eine Tangente an die Siebvorrichtungsmantelfläche, aber bei im wesentlich konstant bleibender Schlitzweite anordnen, so dass man in Durchlaufrichtung der Siebvorrichtung die Siebaufgaben und Siebbehandlungen unter unterschiedlichen Durchführungsbedingungen vornehmen kann. Hierdurch lassen sich höhere Durchsatzmengen realisieren, und insbesondere erhält man eine verbesserte Sortiereffizienz.

Vorzugsweise ist die Siebvorrichtung derart ausgelegt, dass die Stäbe über die Siebkorbhöhe von der Einlassseite zur Auslassseite des Siebkorbs hinweg in Bereichen mit unterschieden Winkeln (ß) bzw. Profiltiefen unterteilt angeordnet sind. Auf diese Art und Weise wird die Siebvorrichtung in Segmente oder Bereiche in Achsrichtung gesehen unterteilt, die unterschiedliche Profiltiefen aber stets eine im Wesentlichen konstante Schlitzweite haben. Bei einer solchen Auslegung kann jedem Segment oder jedem Bereich ein vorbestimmt ausgebildetes Tragelement, vorzugsweise ein vorbestimmter, ausgebildeter Tragring, zugeordnet werden. Ganz generell gesehen können sich der Profilwinkel und die Profiltiefe von Tragelement zu Tragelement kontinuierlich ändern. Welche Ausgestaltungsform man auch immer wählt, wird gerade durch die spezielle Profilierung der den Siebschlitz bzw. den Siebspalt erzeugenden Schlitzflanken erreicht, das unabhängig von der Profiltiefe bzw. dem Profilwinkel die Siebschlitzweite stets konstant bleibt.

Gemäß der bevorzugten Ausführungsform von Siebvorrichtungen können die Siebstäbe axial zur Siebkorbachse ausgerichtet sein, oder alternativ linear geneigt zur Siebachse ausgerichtet sein, oder gemäß einer weiteren bevorzugten Ausführungsform können die Siebstäbe diskontinuierlich gekrümmt zur Siebkorbachse ausgebildet sein. Die Ausrichtung der Siebstäbe wird nach Maßgabe und abgestimmt auf die Siebaufgaben und Siebbehandlungen gewählt.

Vorzugsweise zeichnet sich eine Siebvorrichtung dadurch aus, dass die Siebstäbe über die Siebkorbhöhe von der Einlassseite zur Auslassseite hinweg bei gleichbleibender Schlitzweite zwischen den jeweiligen Siebschlitz bzw. den Siebspalt erzeugenden Schlitzflanken unter unterschiedlichen Winkeln zu einer Tangente an die Siebkorbmantelfläche zur Erzeugung von unterschiedlichen Profiltiefen angeordnet sind. Vorzugsweise ist die Auslegung derart getroffen, dass dieser Winkel zu einer Tangente an der Siebkorbmantelfläche von der Einlassseite zu der Auslassseite des Siebkorbs größer wird. Zumindest sind bei der bevorzugten Ausführungsform der erfindungsgemäßen Siebvorrichtung die Siebstäbe von der Einlassseite zur Auslassseite unterschiedlich stark zu der Tangente an die Siebkorbmantelfläche geneigt, so dass sich unterschiedliche Profiltiefen hierdurch verwirklichen lassen, ohne dass sich die Schlitzweite verändert.

Nach der Erfindung ist der Siebstab an den Siebschlitz bzw. den Siebspalt erzeugende Schlitzflanken derart gestaltet, dass an diesem Kopfbereich des Siebstabs stromaufwärtig und stromabwärtig diese schlitzerzeugenden Flanken jeweils einen Radius mit einem gemeinsamen Mittelpunkt haben, wobei die Radien der schlitzerzeugenden Flanken unterschiedlich groß sind. Hierdurch lassen sich Siebvorrichtungen bereit stellen, und zwar sogenannte "Stabsiebvorrichtungen", deren Siebstäbe am Kopfbereich unterschiedliche Winkel zu einer Tangente an der Siebmantelfläche haben und unterschiedlich Profiltiefen hierdurch erhalten und dennoch die Schlitzweite im wesentlichen unverändert bleibt. Da die schlitzerzeugenden Flanken am Kopfbereich jeweils einen Radius haben, denen ein gemeinsamer Mittelpunkt zugeordnet ist, verändert sich in Abhängigkeit von dem Neigungswinkel lediglich die Profiltiefe, nicht aber die Schlitzweite.

Nachstehend wird die Erfindung an Hand von bevorzugten Ausgestaltungsformen unter Bezugnahme auf die beigefügte Zeichnung ohne jeglichen beschränkenden Charakter näher erläutert. In der Zeichnung zeigt:
- Fig. 1: eine schematische perspektivische Gesamtansicht einer Siebvorrichtung in Form eines Siebkorbs mit kontinuierlicher Veränderung von Profilwinkel und Profiltiefe bezüglich der Längsachse des Siebkorbs und unter Verdeutlichung eines tordierten Siebstabs;
- Fig. 2: eine schematische Ausschnittsansicht von Kopfbereichen von zwei aufeinander folgenden Siebstäben in einer vergrößerten Darstellung;
- Fig. 3: eine schematische perspektivische Ansicht einer bevorzugten Ausführungsform einer Siebvorrichtung in Form eines Siebkorbs mit Bereichen unterschiedlicher Profiltiefen in Längsachsrichtung des Siebkorbs gesehen;
- Fig. 4: eine schematische Ansicht eines Ausschnitts einer Siebvorrichtung, bei der die Siebstäbe axial zur Siebkorbachse ausgerichtet sind;
- Fig. 5: eine weitere bevorzugte Ausführungsform einer Ausführungsvariante einer Siebvorrichtung, bei der die Siebstäbe linear geneigt zur Siebkorbachse ausgerichtet ist, und
- Fig. 6: eine schematische Ausschnittsansicht einer Ausführungsvariante einer Siebvorrichtung, bei der die Siebstäbe diskontinuierlich gekrümmt zur Siebkorbachse ausgerichtet sind.

In den Figuren der Zeichnung sind gleiche oder ähnliche Teile mit denselben Bezugszeichen versehen.

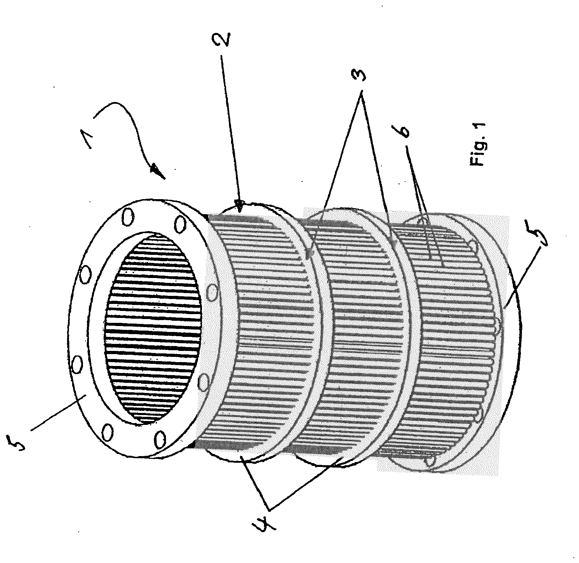

Als bevorzugtes Ausführungsbeispiel einer insgesamt mit 1 bezeichneten Siebvorrichtung ist in Figur 1 ein zylindrischer Siebkorb 2 gezeigt. Natürlich kann die erfindungsgemäße Siebvorrichtung 1 auch in Form einer Siebplatte ausgebildet sein. Die Siebvorrichtung 1 umfasst Tragelemente 3, welche bei dem dargestellten Beispiel als Tragringe 4 ausgebildet sind. An den axialen Endbereichen der Siebvorrichtung 1 sind sogenannte Stirnflansche 5 vorgesehen. In entsprechende Aufnahmeausnehmungen des Tragelements 3 sind Siebstäbe 6 eingesetzt, zwischen deren Kopfbereiche 7 jeweils ein Siebschlitz oder Siebspalt gebildet wird.

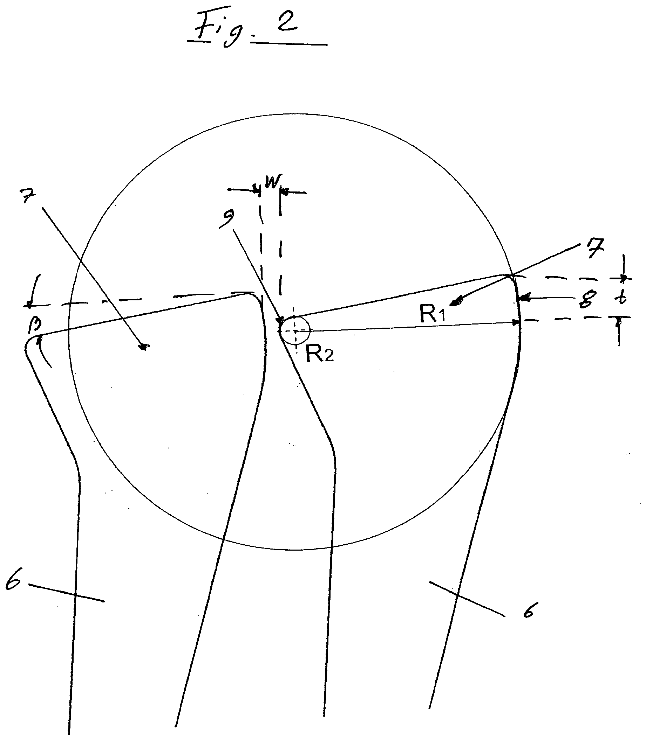

Aus Figur 2 ist die nach der Erfindung wesentliche Ausgestaltung eines Kopfbereichs 7 von beispielsweise zwei aufeinander folgenden Siebstäben 6 gezeigt. Die den Siebschlitz bzw. Siebspalt erzeugende Schlitzflanken 8, 9 haben unterschiedliche Radien R1, R2, die aber einen gemeinsamen Mittelpunkt besitzen. Durch diese Auslegung wird erreicht, dass unabhängig von dem Winkel ß zu einer Tangente an die gedachte Siebkorbmantelfläche sich unterschiedliche Profiltiefen t oder Profilwinkel ß einstellen lassen, aber die Schlitzweite w immer im Wesentlichen konstant bleibt.

Obgleich in der Zeichnung nicht dargestellt ist, könnte die Auslegung auch derart getroffen werden, dass die stromaufwärtigen und stromabwärtigen schlitzerzeugenden Flanken am Kopfbereich 7 von benachbarten Siebstäben 6 jeweils einen Radius mit einem gemeinsamen Mittelpunkt haben.

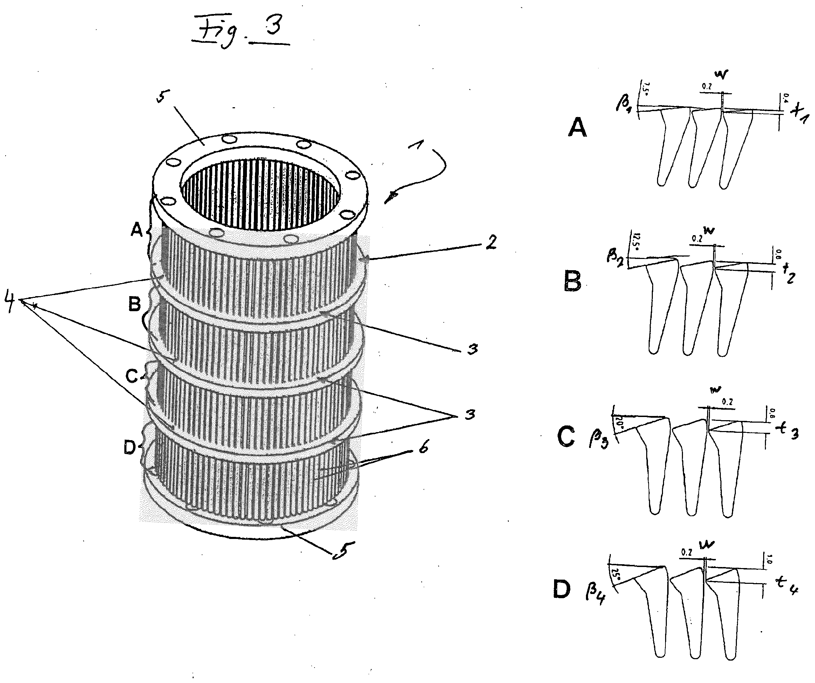

Unter Bezugnahme auf Figur 3 wird mit einer bevorzugte Ausgestaltungsform einer Siebvorrichtung 1 eine solche Auslegung verdeutlicht, bei der in Längsachse des Siebkorbs gesehen unterschiedliche Zonen oder Bereiche A, B, C, D verwirklicht sind. Wie aus den schematischen Darstellungen auf der rechten Seite in Figur 3 zu erkennen ist, ändern sich die Profilwinkel β₁, β₂, β₃, β₄ in Höhenrichtung und werden vorzugsweise im Bereich A bis zum Bereich D größer. Auch ändert sich die Profiltiefe t, und zwar entsprechend den Profilwinkeln ß ebenfalls in Figur 3 von oben nach unten gesehen großer werdend.

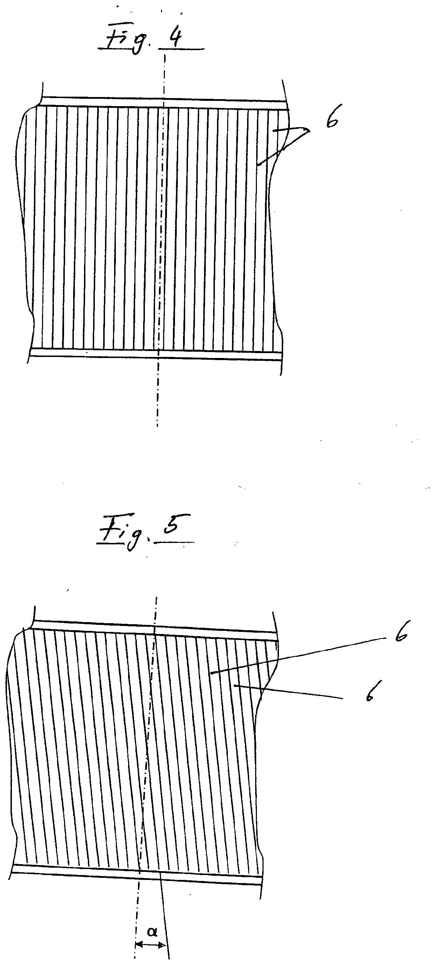

An Hand den Figuren 4 bis 6 werden bevorzugte Ausrichtungsweisen der Siebstäbe 6 bezogen auf die Siebkorbachse verdeutlicht, welche in den Figuren 4 bis 6 in gebrochener Linie eingetragen ist.

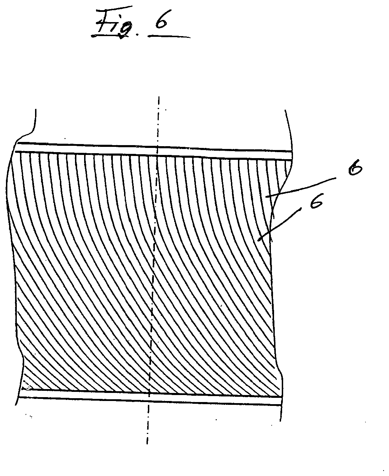

Nach der Figur 4 sind die Siebstäbe axial zur Siebkorbachse als bevorzugte Ausführungsform der Siebvorrichtung ausgerichtet. In Figur 5 sind die Siebstäbe 6 linear geneigt unter einem Winkel α zur Siebkorbachse als bevorzugte Ausführungsform der Siebvorrichtung ausgerichtet. Wie aus Figur 6 schließlich zu ersehen ist, sind die Siebstäbe 6 diskontinuierlich gekrümmt zur Siebkorbachse als bevorzugte Ausführungsform der Siebvorrichtung ausgerichtet.

Insbesondere ist es bei der Erfindung wesentlich, dass sich in Höhenrichtung der Siebvorrichtung unterschiedliche Profilwinkel ß und Profiltiefen t vorgeben lassen, ohne dass sich aber die Schlitzweite w ändert. Hierdurch lässt sich die Siebvorrichtung in Durchlaufrichtung an die jeweiligen Erfordernisse, Gegebenheiten und Behandlungsbedingungen anpassen und in gezielter Weise hierauf abstimmen.

## Patentansprüche

1. Profilierter Siebstab (6) mit einem Fußbereich und einem Kopfbereich (7), welcher mit jeweils einem benachbarten Siebstab (6) einen Siebschlitz bzw. Siebspalt erzeugende Schlitzflanken (8, 9) hat, wobei die Fußbereiche in Tragelementen (3) aufgenommen sind und wobei die schlitzerzeugenden Flanken (8, 9) am Kopfbereich (7) des Siebstabs (6) stromaufwärtig und stromabwärtig jeweils einen Radius (R1, R2) haben, wobei die jeweiligen Radien (R1, R2) stromaufwärtig und stromabwärtig der schlitzerzeugenden Flanken (8, 9) am Kopfbereich (7) des Siebstabs (6) einen gemeinsamen Mittelpunkt haben, **dadurch gekennzeichnet, dass** die Radien (R1, R2) der schlitzerzeugenden Flanken (8,9) unterschiedlich groß sind.

2. Profilierter Siebstab (6) nach Anspruch 1, **dadurch gekennzeichnet, dass**
der Radius (R1) der stromaufwärtigen schlitzerzeugenden Flanke (8) größer als der Radius (R2) der stromabwärtigen schlitzerzeugenden Flanke (9) ist.

3. Protilierter Siebstab (6) nach einem der Ansprüche 1 bis 2, **dadurch gekennzeichnet, dass** der Radius (R2) an der stromabwärtigen schlitzerzeugenden Flanke (9) sich auf 0,1 mm bis 1,9 mm. vorzugsweise auf 0,2 mm bis 0,5 mm beläuft.

4. Profilierter Siebstab (6) nach einem der Ansprüche 1 bis 3, **dadurch gekennzeichnet, dass** der Radius (R1) an der stromaufwärtigen schlitzerzeugenden Flanke (8) sich auf 2,0 mm bis 6 mm, vorzugsweise auf 2,1 mm bis 4,0 mm beläuft.

5. Profilierter Siebstab (6) nach einem der Ansprüche 1 bis 4, **dadurch gekennzeichnet, dass** die Radien (R1, R2) an den stromaufwärtigen und stromabwärtigen schlitzerzeugenden Flanken (8, 9) durch eine geradlinig verlaufende Tangente verbunden sind.

6. Siebvorrichtung (1), vorzugsweise in Form eines Siebkorbs, mit zwischen profilierten Siebstäben (6) gebildeten Siebschlitzen oder -spalten, wobei die Siebstäbe (6) an ihrem Fußbereich in an die Fußbereichsgeometrie angepassten Aufnahmeausnehmungen von Tragelementen (3) aufgenommen und an diesen dauerhaft befestigt sind, **dadurch gekennzeichnet, dass** die Siebstäbe (6) Siebstäbe gemäß einem der vorangehenden Ansprüche sind.

7. Siebvorrichtung nach Anspruch 6, **dadurch gekennzeichnet, dass** die Siebstäbe (6) über die Siebkorbhöhe von der Einlassseite zur Auslassseite des Siebkorbs (2) hinweg in Bereichen (A bis D) mit unterschiedlichen Profilwinkeln (β, β₁, β₂, β₃, β₄) bzw. Profiltiefen (t) unterteilt angeordnet sind.

8. Siebvorrichtung nach Anspruch 6 oder 7, **dadurch gekennzeichnet, dass** die Siebstäbe (6) axial zur Siebkorbachse ausgerichtet sind.

9. Siebvorhchtung nach Anspruch 6 oder 7, **dadurch gekennzeichnet, dass** die Siebstäbe (6) linear geneigt zur Siebkorbachse ausgerichtet sind.

10. Siebvorrichtung nach Anspruch 6 oder 7, **dadurch gekennzeichnet, dass** die Siebstäbe (6) diskontinuierlich gekrümmt zur Siebkorbachse ausgerichtet sind.

11. Siebvorrichtung nach einem der vorangehenden Ansprüche 6 bis 10, **dadurch gekennzeichnet, dass** die Siebstäbe (6) über die Siebkorbhöhe von der Einlassseite zur Auslassseite hinweg bei gleichbleibender Schlitzweite (w) zwischen den jeweiligen den Siebschlitz bzw. den Siebspalt erzeugenden Schlitzflanken (8, 9) unter unterschiedlichen Winkeln (ß) zu einer Tangente an die Siebkorbmantelfläche zur Erzeugung unterschiedlicher Profiltiefen (t) angeordnet sind.

12. Siebvorrichtung nach Anspruch 11, **dadurch gekennzeichnet, dass** der Winkel (ß) bzw. die Profiltiefe (t) von der Einlassseite zur der Auslassseite des Siebkorbs größer wird.

## Claims

1. A profiled strainer bar (6) with a base region and a head region (7), slot flanks (8, 9) producing a straining slot or straining gap with a respective adjacent strainer bar (6), wherein the base regions are received in supporting elements (3) and wherein the slot-producing flanks (8, 9) on the head region (7) of the strainer bar (6) each have a radius (R1, R2) upstream and downstream of the slot-producing flanks (8, 9) at the head region (7), wherein the respective radii (R1, R2) have a common centre upstream and downstream of the slot-producing flanks (8, 9) at the head region (7) of the profiled strainer bar (6), **characterised in that** the radii (R1, R2) of the slot-producing flanks (8, 9) are of different size.

2. The profiled strainer bar (6) according to claim 1,
**characterised in that**
the radius (R1) of the upstream slot-producing flank (8) is greater than the radius (R2) of the downstream slot-producing flank (9).

3. The profiled strainer bar (6) according to one of claims 1 to 2,
**characterised in that**
the radius (R2) at the downstream slot-producing flank (9) is 0.1 mm to 1.9 mm, preferably 0.2 mm to 0.5 mm.

4. The profiled strainer bar (6) according to one of claims 1 to 3,
**characterised in that**
the radius (R1) at the upstream slot-producing flank (8) is 2.0 mm to 6 mm, preferably 2.1 mm to 4.0 mm.

5. The profiled strainer bar (6) according to one of claims 1 to 4,
**characterised in that**
the radii (R1, R2) at the upstream and downstream slot-producing flanks (8, 9) are connected by a straight-line tangent.

6. A strainer device (1), preferably in the form of a strainer basket, with straining slots or straining gaps formed between profiled strainer bars (6) wherein, at their base region, the strainer bars (6) are received in receiving recesses of supporting elements (3) adapted to the geometry of the base region, and are permanently fixed thereto,
**characterised in that**
the strainer bars (6) are strainer bars according to one of the preceding claims.

7. The strainer device according to claim 6,
**characterised in that**
the strainer bars (6) are arranged subdivided by strainer basket height from the inlet side to the outlet side of the strainer basket (2) in regions (A to D) with different profile angles (β, β1, β2, β3, β4) or profile depths (t).

8. The strainer device according to claim 6 or 7,
**characterised in that**
the strainer bars (6) are aligned axially to the axis of the strainer basket.

9. The strainer device according to claim 6 or 7,
**characterised in that**
the strainer bars (6) are aligned linearly inclined to the axis of the strainer basket.

10. The strainer device according to claim 6 or 7,
**characterised in that**
the strainer bars (6) are aligned in discontinuously curved manner to the axis of the strainer basket.

11. The strainer device according to one of the preceding claims 6 to 10,
**characterised in that**
the strainer bars (6) are arranged by strainer basket height from the inlet side to the outlet side at constant slot width (w) between the slot flanks (8, 9) producing, respectively, the straining slot or straining gap, at different angles (β) to a tangent at the strainer basket outer surface to produce different profile depths (t).

12. The strainer device according to claim 11,
**characterised in that**
the angle (β) or the profile depth (t) increases from the inlet side to the outlet side of the strainer basket.

## Revendications

1. Barre de tamis profilée (6) avec une zone de base et une zone de tête (7), barre de tamis profilée qui possède avec respectivement une barre de tamis voisine (6) des flancs de fentes (8, 9) qui réalisent une fente ou un interstice de tamisage, les zones de base étant accueillies dans des éléments porteurs (3), et les flancs (8, 9) qui réalisent la fente au niveau de la zone de tête (7) de la barre de tamis (6) possédant chacun vers l'amont et vers l'aval un rayon (R1, R2), les rayons respectifs (R1, R2) possédant vers l'amont et vers l'aval des flancs (8, 9) qui réalisent la fente au niveau de la zone de tête (7) de la barre de tamis (6) un centre commun, **caractérisé en ce que** les rayons (R1, R2) des flancs (8, 9) qui réalisent la fente sont de taille différente.

2. Barre de tamis profilée (6) suivant la revendication 1, **caractérisée en ce que** le rayon (R1) au niveau du flanc (8) qui réalise la fente vers l'amont est supérieur au rayon (R2) du flanc (9) qui réalise la fente vers l'aval.

3. Barre de tamis profilée (6) suivant une des revendications 1 à 2, **caractérisée en ce que** le rayon (R2) au niveau du flanc (9) qui réalise la fente vers l'aval est compris entre 0,1 mm et 1,9 mm, de préférence entre 0,2 mm et 0,5 mm.

4. Barre de tamis profilée (6) suivant une des revendications 1 à 3, **caractérisée en ce que** le rayon (R1) au niveau du flanc (8) qui réalise la fente vers l'amont est compris entre 2,0 mm et 6 mm, de préférence entre 2,1 mm et 4,0 mm.

5. Barre de tamis profilée (6) suivant une des revendications 1 à 4, **caractérisée en ce que** les rayons (R1, R2) au niveau des flancs (8, 9) qui réalisent la fente vers l'amont et vers l'aval sont reliés entre eux par une tangente rectiligne.

6. Dispositif de tamisage (1), conçu de préférence sous la forme d'un panier de tamisage avec des fentes ou interstices formés entre les barres de tamis profilés (6), les barres de tamis (6) étant, au niveau de leur base, accueillis dans des cavités d'accueil d'éléments porteurs (3) adaptés à la forme géométrique de la zone de base et fixés à demeure à ceux-ci, **caractérisé en ce que** les barres de tamis (6) sont des barres de tamis suivant une des revendications précédentes.

7. Dispositif de tamisage suivant la revendication 6, **caractérisé en ce que** les barres de tamis (6) sont disposées de façon répartie sur la hauteur du panier de tamisage (2), depuis le côté de l'entrée jusqu'au côté de la sortie dans des zones (A à D) avec des angles de profil (β, β₁, β₂, β₃, β₄) ou profondeurs de profil (t) variables.

8. Dispositif de tamisage suivant la revendication 6 ou 7, **caractérisé en ce que** les barres de tamis (6) sont orientées axialement par rapport à l'axe du panier de tamisage.

9. Dispositif de tamisage suivant la revendication 6 ou 7, **caractérisé en ce que** les barres de tamis (6) sont orientées de façon inclinée linéairement par rapport à l'axe du panier de tamisage.

10. Dispositif de tamisage suivant la revendication 6 ou 7, **caractérisé en ce que** les barres de tamis (6) sont orientées de façon courbée en discontinu par rapport à l'axe du panier de tamisage.

11. Dispositif de tamisage une des revendications précédentes 6 à 10, **caractérisé en ce que** les barres de tamis (6) sont disposées sur la hauteur du panier de tamisage, depuis le côté de l'entrée jusqu'au côté de la sortie, à largeur de fente constante (w) entre les flancs de fente (8, 9) qui réalisent la fente ou l'interstice de tamisage, à des angles (β) différents par rapport à une tangente à la surface enveloppante du panier de tamisage pour créer des profondeurs de profil (t) différentes.

12. Dispositif de tamisage suivant la revendication 11, **caractérisé en ce que** l'angle (β) ou la profondeur de profil (t) augmente depuis le côté de l'entrée vers le côté de la sortie du panier de tamisage.
